Europäisches Patentamt

European Patent Office

Office européen des brevets

(11) Veröffentlichungsnummer: **0 218 034**
A1

## (12) EUROPÄISCHE PATENTANMELDUNG

(21) Anmeldenummer: 86110814.0

(22) Anmeldetag: 05.08.86

(51) Int. Cl.⁴: **B01D 29/38**

(30) Priorität: 19.08.85 DE 3529594

(43) Veröffentlichungstag der Anmeldung:
15.04.87 Patentblatt 87/16

(84) Benannte Vertragsstaaten:
AT BE CH DE FR GB IT LI LU NL SE

(71) Anmelder: **INTERATOM Gesellschaft mit
beschränkter Haftung
Friedrich-Ebert-Strasse
D-5060 Bergisch Gladbach 1(DE)**

(72) Erfinder: **Müller-Frank, Ulrich, Dr. Dipl.-Ing.
Otto-Hahn-Strasse 5
D-5060 Bergisch Gladbach(DE)**

(74) Vertreter: **Mehl, Ernst, Dipl.-Ing. et al
Postfach 22 01 76
D-8000 München 22(DE)**

(54) **Reinigung von Filterplatten.**

(57) Die vorliegende Erfindung betrifft eine Vorrichtung zur Reinigung von porösen Filterplatten, die von beiden Seiten zugänglich sind und insbesondere zur Filtration von Wasser in offenen Becken oder Kanälen benutzt werden. Diese Filterplatten werden bei Bedarf von einer hin-und herverfahrbaren Vorrichtung gereinigt, die auf der Seite des reinen Mediums Spritzdüsen und auf der Seite des verschmutzten Mediums ein Absaugrohr hat. Ein besonderer Absaugkasten umgibt die Spritzdüsen und steht bei Betrieb unter Unterdruck, so daß die von den Spritzdüsen aufgewirbelten Schmutzpartikel ständig abgesaugt werden und das reine Medium auch nicht während des Reinigungsbetriebes verunreinigt wird.

EP 0 218 034 A1

## Reinigung von Filterplatten

Die vorliegende Erfindung betrifft eine Vorrichtung zur Reinigung von porösen Filterplatten, die von beiden Seiten zugänglich sind und insbesondere zur Filtration von Wasser in offenen Becken oder Kanälen benutzt werden. Als Filterplatten dienen feinmaschige Fasermatten, die sich bei kleinen Filterflächen auf ein grobmaschiges flexibles Netz und bei größeren Filterflächen auf ein starres Gitter auf der Seite des reinen Mediums abstützen. In diesen Fasermatten setzen sich naturgemäß feine Schmutzteilchen ab, die bei längerer Betriebszeit den Durchflußwiderstand erheblich erhöhen und daher entfernt werden müssen.

In der internationalen Patentanmeldung WO 82/03338 wird eine Filtervorrichtung zur Trennung von Flüssigkeiten und Feststoffen beschrieben für Filterplatten der oben genannten Art, die sich auf ein starres Gitter abstützen. Auf beiden Seiten der Filterplatte sind einandergegenüberliegend nahezu identische Vorrichtungen angebracht, die bei Bedarf gemeinsam parallel zur Filterfläche hin und her bewegt werden und mit Gleitplatten die Filterplatte berühren. Auf der Seite des reinen Mediums ist ein Druckrohr mit einer Reihe von Spritzdüsen angeordnet, die mit hohem Druck die Filterplatte reinigen sollen und die in den Poren enthaltenen Verunreinigungen auf die Seite des ungereinigten Mediums zurückspülen sollen. Dort ist den Spritzdüsen gegenüberliegend ein Saugrohr angeordnet, das ebenfalls mit Gleitplatten die Filterplatte berührt und die von den Spritzdüsen zurückgespülten Verunreinigungen auffängt und zu einem besonderen Schlammsammelraum befördert. Die Spritzdüsen werden von Druckwasser beaufschlagt, das mit einer Pumpe auf der Seite des reinen Mediums entnommen wird. Bei dieser Anordnung läßt es sich nicht vermeiden, daß ein Teil der in die Poren der Filterplatten eingedrungenen feinen Schmutzpartikel von den Spritzdüsen aufgewirbelt wird und zwischen Filterfläche und Gleitplatten hindurch auf die Seite des reinen Mediums dringt.

Aufgabe der vorliegenden Erfindung ist es, die bereits auf der Seite des reinen Mediums vorhandenen Schmutzpartikel aufzufangen und zu entfernen.

Zur Lösung dieser Aufgabe wird eine Vorrichtung nach dem 1. Anspruch vorgeschlagen. Der erfindungsgemäße Absaugkasten umgibt mit seinem U-förmigen Querschnitt das Druckrohr mit den Spritzdüsen und mit den Gleitplatten. Er ist auch an seinen Enden geschlossen und hat nur gegenüber der Filterfläche eine ebene, offene Seite. Wenn in diesem Kasten gegenüber dem ihn umgebenden reinen Medium ein Unterdruck aufrechterhalten wird, fließt an den Kanten zwischen diesem Kasten und der Filterfläche reines Medium in den Kasten hinein und nimmt alle Schmutzpartikel mit, die mit den Spritzdüsen aufgewirbelt worden sind. Das abgesaugte Medium kann, ähnlich wie auf der anderen Seite der Filterplatte, einem besonderen Schlammsammelraum zugeführt werden.

Nach dem 2. Anspruch wird das abgesaugte und feine Schmutzpartikel enthaltende Medium anschließend mit Hilfe der Spritzdüsen zur Reinigung der Filterplatten verwendet. Damit wird die Gesamtmenge des einem Schammsammelraum zuzuführenden Mediums erheblich verringert.

Im 3. Anspruch wird eine weitere Möglichkeit dargestellt, den Verbrauch an reinem Filtermedium zu verringern, indem der Absaugkasten nur noch auf der Seite seiner vorauslaufenden Kante absaugt. Zwangsläufig wird zwischen den Spritzdüsen und der vorauslaufenden Kante des Kastens am meisten an feinen Schmutzpartikeln aufgewirbelt.

Im 4. Anspruch wird eine weitere Möglichkeit dargestellt, die zwischen Spritzdüsen und der vorauslaufenden Kante des Absaugkastens aufgewirbelten Schmutzpartikel bevorzugt abzusaugen. Durch die bei Hin-und Herbewegung unterschiedliche Spaltweite zwischen der Kante des Absaugkastens und der Filterplatte wird dort, wo der größte Anfall an Schmutz zu erwarten ist, mehr abgesaugt.

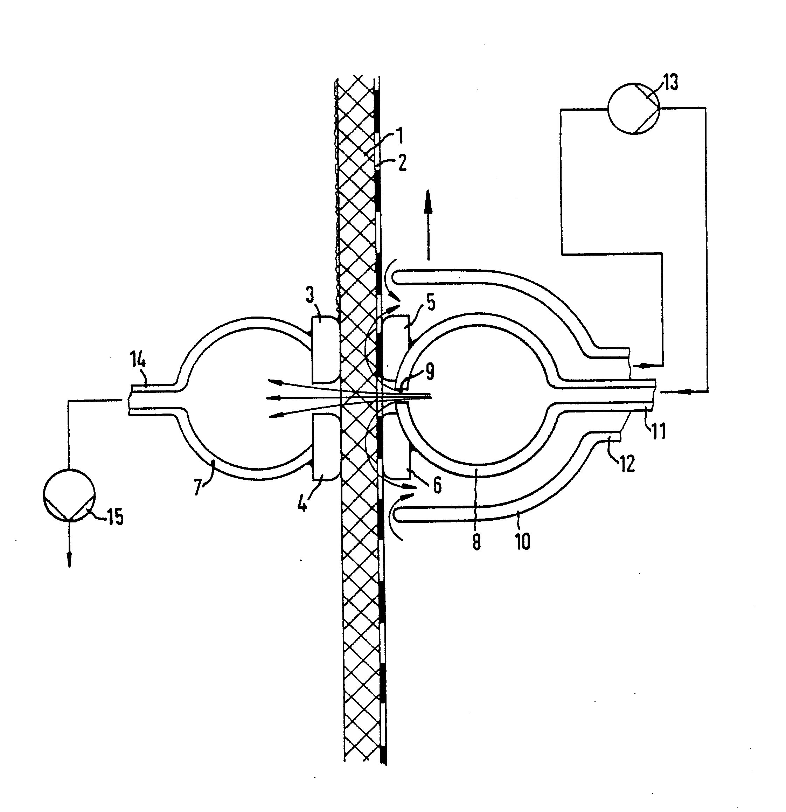

Die Figur 1 zeigt einen waagerechten Schnitt durch eine erfindungsgemäße Vorrichtung. Die poröse, feinfaserige Filterplatte 1 ist in einem nicht näher beschriebenen oder dargestellten Wasserbecken in diesem Falle senkrecht ausgespannt und stützt sich auf der Seite des reinen Mediums auf ein grobmaschiges und flexibles Netz 2 ab. An Filterplatte 1 bzw. Netz 2 anliegend sind je zwei Gleitplatten 3 und 4 bzw. 5 und 6 angeordnet, die auf der Seite des verschmutzten Mediums mit einem senkrechten Saugrohr 7 und auf der Seite des reinen Mediums mit einem senkrechten Druckrohr 8 fest verbunden sind. Das Druckrohr 8 enthält zwischen den beiden Gleitplatten 5 und 6 eine Reihe von Spritzdüsen 9, es ist starr mit einem Absaugkasten 10 verbunden und hat einen den Absaugkasten 10 durchdringenden Druckstutzen 11, während der Absaugkasten 10 selbst einen Saugstutzen 12 trägt. Beide Stutzen sind, wie nur schematisch angedeutet wird, über flexible Leitungen mit den entsprechenden Stutzen einer Pumpe 13 verbunden. Die gesamte, aus Saugrohr, Druckrohr und Absaug kasten mit den entsprechenden Gleitplatten bestehende Vorrichtung ist beidseitig der örtlich festen Filterplatte 1 in waagerechter Richtung hin- und herverfahrbar angeordnet und wird in an sich bekannter Weise und ohne nähere Darstellung oder Beschreibung über einen Kettenantrieb und mit einem Elektromotor bei Bedarf in Gang gesetzt. Das Saugrohr 7 trägt einen weiteren Absaugstutzen 14, der, wie ebenfalls nur schematisch angedeutet ist, über eine flexible Leitung mit den entsprechenden Stutzen einer Schlammpumpe 15 verbunden ist. Bei Betrieb dieser Vorrichtung reinigen die aus den Spritzdüsen austretenden Wasserstrahlen die porösen Filtermatten und spülen ein Gemisch aus Medium und Schmutzpartikeln zurück durch die Filterplatte auf die Seite des verunreinigten Mediums, von wo diese Schmutzpartikel im wesentlichen über das Saugrohr 7 und mit der Schlammpumpe 15 entfernt werden. Der während des Betriebes der Vorrichtung im Ansaugkasten 10 aufrechterhaltene Unterdruck sorgt dafür, daß kein verschmutztes Medium zwischen Filterplatte 1 bzw. Netz 2 und dem Ansaugkasten 10 ins reine Medium vordringen kann. Der große Pfeil rechts neben der Filterplatte zeigt die momentane Bewegungsrichtung der Vorrichtung an, während die kleinen Pfeile die Strömungsrichtung des Wassers darstellen.

## Ansprüche

1. Vorrichtungzur Reinigung von Filterplatten mit einem auf der reinen Seite des Filters verfahrbaren Druckrohr mit einer Anzahl von Spritzdüsen und einem auf der anderen Seite des Filters im gleichen Sinn verfahrbaren Saugrohr zur Schlammabsaugung,

**dadurch gekennzeichnet,**

daß dieses Druckrohr 8 auf der Seite des reinen Mediums von einem Absaugkasten 10 umgeben ist, der mit seiner offenen Seite der Filterfläche zugewandt ist und in dem ein Unterdruck aufrechterhalten werden kann gegenüber dem ihn umgebenden reinen Medium.

2. Vorrichtung nach Anspruch 1,

**dadurch gekennzeichnet ,**

daß dieser Absaugkasten 10 mit der Saugseite einer Pumpe 13 verbunden ist, deren Druckseite über das Druckrohr 8 mit den Spritzdüsen 9 verbunden ist.

3. Vorrichtung nach Anspruch 1 und 2,

**dadurch gekennzeichnet,**

daß der Absaugkasten 10 senkrecht zur Bewegungsrichtung eine Trennwand hat und bei der Hin- und Herbewegung jeweils nur die vorauslaufende Hälfte des Kastens mit der Saugseite der Pumpe 13 verbunden ist.

4. Vorrichtung anch Anspruch 1,

**dadurch gekennzeichnet,**

daß der Absaugkasten 11 um eine zur Bewegungsrichtung senkrechte Achse um einen geringen Winkel schwenkbar angeordnet ist, so daß bei der Hin- und Herbewegung jeweils die vorauslaufende Kante des Kastens zur Filterfläche einen geringeren Spalt aufweist, als die nachlaufende Kante.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-C- 964 287 (RAUMA-REPOLA OY)<br>* Seite 2, Zeilen 43-81 * | 1,2 | B 01 D 29/38 |
| | --- | | |
| A,D | WO-A-8 203 338 (PROMETALL)<br>* Zusammenfassung * | 1 | |
| | --- | | |
| A | FR-A-1 327 647 (B. SASSI)<br>* Seite 2; Figur 4 * | 1 | |
| | --- | | |
| P,A | EP-A-0 164 932 (FILTRATION WATER FILTERS)<br>* Seite 9, Anspruch 1 * | 1 | |
| | ----- | | |

RECHERCHIERTE SACHGEBIETE (Int. Cl. ³)

B 01 D

Der vorliegende Recherchenbericht wurde für alle Patentansprüche erstellt.

| Recherchenort | Abschlußdatum der Recherche | Prüfer |
|---|---|---|
| DEN HAAG | 02-02-1987 | KERRES P.M.G. |

KATEGORIE DER GENANNTEN DOKUMENTE
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82